(19) Europäisches Patentamt
European Patent Office
Office européen des brevets

(11) Numéro de publication: **0 053 048 B1**

# (12) FASCICULE DE BREVET EUROPEEN

(45) Date de publication de fascicule du brevet: **29.04.92**

(51) Int. Cl.⁵: **G01S 15/89**, G01S 7/52

(21) Numéro de dépôt: **81401582.2**

(22) Date de dépôt: **13.10.81**

## (54) Système de détection multivoies à émission diversifiée.

(30) Priorité: **04.11.80 FR 8023519**

(43) Date de publication de la demande:
**02.06.82 Bulletin 82/22**

(45) Mention de la délivrance du brevet:
**29.04.92 Bulletin 92/18**

(84) Etats contractants désignés:
**BE DE GB IT NL**

(56) Documents cités:
**GB-A- 946 839**
**US-A- 2 368 069**
**US-A- 3 458 854**
**US-A- 3 676 584**
**US-A- 3 680 100**
**US-A- 3 716 824**
**US-A- 3 750 152**
**US-A- 3 771 116**
**US-A- 3 875 550**

**IEEE Radar Conference Publ. 155, 1977, pp. 46-52**

(73) Titulaire: **THOMSON-CSF**
**51, Esplanade du Général de Gaulle**
**F-92800 Puteaux(FR)**

(72) Inventeur: **Tournois, Pierre**
**THOMSON-CSF SCPI 173, bld Haussmann**
**F-75360 Paris Cedex 08(FR)**

(74) Mandataire: **Benoit, Monique**
**THOMSON-CSF SCPI**
**F-92045 PARIS LA DEFENSE CEDEX 67(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 053 048 B1

## Description

La présente invention se rapporte aux systèmes de détection par échos du type radar ou sonar dans lesquels un secteur angulaire est le siège d'émissions de rayonnements électromagnétiques ou ultrasoniques. La détermination du contenu du secteur découle de la détection et de l'analyse détaillée des signaux réfléchis par les points de l'espace qui ont été irradiés ou insonifiés. Cette analyse fournit des données relatives à la position angulaire et à l'éloignement des cibles. Au moyen de ces données, on peut former sur l'écran d'un tube à rayons cathodiques une image représentative du secteur exploré. L'éloignement d'une cible par rapport à l'ensemble d'émission-réception est fonction du temps écoulé entre l'émission d'une impulsion et la réception de l'écho qui lui correspond. La position angulaire de la cible peut dépendre de la directivité des moyens d'émission et/ou de réception. L'invention concerne plus particulièrement les systèmes de détection par échos dans lesquels la réception met en oeuvre un récepteur tandis que l'émission des ondes est assurée simultanément par un ensemble d'éléments rayonnants.

Une telle association de moyens émetteurs et récepteurs a déjà été proposée dans le brevet américain délivré le 23 août 1966, sous le numéro 3 268 893. Ce brevet américain décrit notamment un système de détection multivoies comprenant à l'émission un ensemble d'éléments rayonnants qui rayonnent chacun un signal continu à une fréquence porteuse donnée unique, le signal rayonné par chaque élément étant modulé en amplitude par un signal caractéristique qui est un signal aléatoire distinct pour chaque élément. Ces éléments sont disposés et rayonnent de manière telle que, dans chaque direction angulaire de l'espace, soient reçues des contributions d'au moins deux éléments rayonnants. Ces contributions et ces éléments sont différents pour chaque direction angulaire et chaque point de l'espace peut donc renvoyer un écho formé d'une onde composite unique. A la réception, il est prévu un récepteur et des voies angulaires comportant des filtres adaptés conçus pour reconnaître chacun l'onde composite unique réfléchie par une cible dans la direction angulaire associée. Un tel système permet donc une détermination de la direction angulaire d'ou vient un écho.

Cependant ce système nécessite autant de filtres adaptés que l'on veut reconnaître de directions différentes et est donc coûteux et complexe dès que l'on souhaite avoir un minimum de précision angulaire.

La présente invention vise à pallier cet inconvénient en mettant à profit le fait que le nombre d'éléments rayonnants d'émission, dans un système tel que celui du brevet américain cité ci-dessus, est beaucoup plus faible que le nombre de directions angulaires à séparer. On adopte donc une émission diversifiée qui consiste, comme on l'a déjà expliqué, à appliquer aux éléments rayonnants d'émission des excitations diversifiées. Une telle émission est dite colorée, car elle assigne à chaque direction du secteur de surveillance une loi d'éclairement qui lui est propre et qui va caractériser chaque écho selon sa provenance. L'écho ainsi personnalisé peut être perçu de façon univoque par un ensemble de voies de réception.

L'invention consiste à séparer, dans l'écho reçu d'une cible, les différents signaux caractéristiques de chaque élément rayonnant à l'aide de filtres adaptés et d'effectuer ensuite une formation de voies de réception simplement à l'aide de retards.

Un tel principe peut s'appliquer aussi bien au radar qu'au sonar, ainsi que par exemple aux appareils d'imagerie médicale ou de test non destructif.

L'invention a pour objet un système de détection multivoies à émission diversifiée comprenant des moyens d'émission utilisant un ensemble d'éléments rayonnants, et des moyens de réception captant des échos dus à la réflexion des rayonnements émis par lesdits éléments rayonnants, dans lequel lesdits moyens d'émission comprennent des moyens d'excitation impulsionnelle simultanée desdits éléments rayonnants assignant à chacun d'eux un signal d'émission caractéristique, lesdits moyens de réception comportant un récepteur relié à plusieurs voies réceptrices correspondant respectivement à des directions angulaires prédéterminées, caractérisé en ce que chaque élément rayonnant illumine sensiblement un même secteur angulaire, en ce que lesdits moyens de réception sont disposés au sommet dudit secteur angulaire et en ce que lesdites voies réceptrices comprennent plusieurs filtres, adaptés respectivement à la configuration particulière des signaux d'émission caractéristiques et connectés audit récepteur pour séparer dans les échos reçus lesdits signaux caractéristiques, et des moyens de formation de voies angulaires connectés auxdits filtres adaptés pour compenser, pour chaque voie angulaire, les retards subis par lesdits signaux caractéristiques contenus dans un écho venant de la direction angulaire correspondante.

L'invention sera mieux comprise au moyen de la description ci-après et des figures annexées parmi lesquelles :

- la figure 1 représente un ensemble d'éléments rayonnants permettant de réaliser une émission diversifiée ;
- les figures 2, 3, 4 et 5 illustrent quelques structures de bande des signaux pouvant être mises en oeuvre dans une émission diversifiée ;

- la figure 6 est le schéma d'une réception dépourvue de directivité permettant d'obtenir une sélection en association avec l'ensemble émetteur de la figure 1 ; et
- la figure 7 est le schéma d'un mode de réalisation du système de détection selon l'invention.

Sur la figure 1, on peut voir un ensemble 1 d'émission d'ondes électromagnétiques ou ultrasoniques permettant de réaliser une détection par échos du type radar ou sonar dans le cadre d'une émission diversifiée. L'espace radio-électrique ou le milieu de propagation marin sont rapportés à un système d'axes u, v, w dont l'origine O située au centre de l'ensemble 1 représente aussi le sommet d'un secteur angulaire de surveillance. L'ensemble d'émission 1 comporte par exemple un agencement matriciel d'éléments rayonnants $E_{1,1}...E_{1,n}...E_{m,1}...E_{m,n}$ qui, dans le cas d'un sonar, sont des transducteurs électromécaniques capables d'insonifier le secteur de surveillance de façon uniforme. Chaque élément rayonnant de l'ensemble 1 est excité par un générateur d'émission 2 qui délivre sur une sortie 3 une impulsion brève servant de référence. Un ensemble de connexions 4 fournit à chacun des éléments rayonnants de l'ensemble 1 des signaux impulsionnels 5 dont l'allure est représentée sur la figure 1 à gauche du générateur 2. La durée des signaux d'excitation 5 est T et leur forme S(t) est choisie de façon à pouvoir identifier chaque élément rayonnant par le contenu qu'il émet. Pour un nombre m x n d'éléments rayonnants, on peut par exemple assigner une fréquence d'émission distincte à chaque élément rayonnant comme le montre la figure 2. Si la bande de fréquences de l'émission couvre une plage B limitée par les fréquences $f_{min}$ et $f_{max}$, on voit que cette façon de faire revient à utiliser m x n signaux de bande b avec b = B/m x n = 1/T. On utilise donc m x n fréquences porteuses $f_{1,1}$, $f_{1,2}$,....$f_{m,n}$ séparées l'une de l'autre de la valeur b. Pour identifier ces signaux, on se servira de filtres passe bande décalés en fréquence.

Selon une technique différente, on peut utiliser une seule fréquence porteuse $f_o$ et distinguer les signaux par une modulation au moyen de m x n codes orthogonaux occupant chacun la bande B. Cette technique est illustrée par la figure 3 où $C_{1,1}....C_{m,n}$ représentent les fonctions orthogonales identifiables de durée T.

Comme autres modes de codage, on peut utiliser comme le montre la figure 4 un code C de durée T qui module plusieurs fréquences porteuses décalées d'une valeur b' supérieure à 1/T. On peut également prévoir W fréquences porteuses modulées par p x q codes $C_{1,1}....C_{p,q}$ de durée T avec

$$\frac{m \times n}{p \times q} = W$$

comme le montre la figure 5.

Quelque soit le mode de codage utilisé pour exciter les éléments rayonnants de l'ensemble 1, on voit que l'espace insonifié est "coloré". En effet, on a représenté sur la figure 1 un quadrillage de l'espace par r lignes parallèles à v et par s lignes parallèles à u. L'un des points $P_{i,k}$ de l'ensemble des r x s intersections recueille une émission composée de m x n valeurs discernables. Les coordonnées polaires $\theta_{i,k}$, $\phi_{i,k}$, $\rho_{i,k}$ du point $P_{i,k}$ déterminent avec les coordonnées des éléments rayonnants $E_{m,n}$, un type d'irradiation particulier que l'on peut calculei.

Pour fixer les idées, si l'on suppose que les éléments rayonnants de la figure 1 se réduisent à une simple rangée de M éléments $E_1$, $E_2$..... $E_j$,.....$E_M$ et si l'on désigne un point de l'espace coloré par $P_i$, on peut représenter l'irradiation reçue en $P_i$ par la formule :

$$S(P_i) = \sum_{j=1}^{M} C_j(t - \tau_{ij})$$

où $C_j(t)$ est l'excitation codée appliquée à l'élément rayonnant $E_j$.

$\tau_{ij}$ est le temps de propagation le long d'une ligne joignant $E_j$ à $P_i$.

Cette formule simplifiée ne tient pas compte de l'atténuation en fonction de l'éloignement.

En toute généralité, les éléments rayonnants peuvent être disposés de façon quelconque, pourvu qu'ils échantillonnent convenablement l'espace et que l'on puisse se servir de codes identifiables pour prédire et reconnaitre sans ambiguité les combinaisons qui représentent cette coloration de l'espace.

La diversité d'emission qui vient d'être décrite en référence aux figures 1 à 5 joue un rôle essentiel sur la détection des échos. En effet, une cible recevant l'émission colorée va réfléchir un écho coloré que l'on peut isoler des autres échos par une corrélation basée sur la connaissance à priori de la composition de l'écho. En chaque point $P_{i,k}$ de l'espace est reçu un signal $S(P_{i,k})$ formé de la somme en amplitude et en phase des codes émis par les émetteurs $E_{1,1}$,... $E_{m,n}$. Ces codes sont reçus au point $P_{i,k}$ avec une combinaison de retards qui dépend des positions géométriques des émetteurs et du point $P_{i,k}$. Pour d'autres points tels que $P_{i,k+1}$, $P_{i-1,k}$,$P_{i-1,k+1}$..., les combinaisons de

retards sont différentes et donc les signaux S assignés à ces autres points le sont également. Le signal $S(P_{i,k})$ dépend donc :

- des codes C émis
- des coordonnées spatiales du point de l'espace à l'origine d'un écho
- des coordonnées spatiales des éléments rayonnants de l'ensemble d'émission 1.

Si les points $P_{i,k}$ sont suffisamment éloignés de l'ensemble d'émission, le signal $S(P_{i,k})$ ne dépend plus que des coordonnées $\theta_{i,k}$ et $\phi_{i,k}$.

La figure 6 montre comment on peut exploiter à la réception une émission colorée, alors que le récepteur d'onde 6 ne possède pas de directivité propre. Les signaux d'écho sont reçus par le récepteur 6 qui délivre un signal électrique complexe à l'entrée d'un ensemble de voies angulaires. Chaque voie angulaire est affectée à une direction de provenance de l'écho qui sur la figure 1 est la droite passant par O et par $P_{i,k}$. Le récepteur 6 peut par exemple être situé au point O et le système récepteur de la figure 6 peut comporter r x s voies angulaires. Chaque voie angulaire est en fait constitué d'un filtre adapté 7 aux signaux $S(P_{i,k})$ duquel émerge un pic de corrélation $V(P_{i,k})$. Le filtre adapté 7 de la voie angulaire ($\theta_{i,k}$, $\phi_{i,k}$, $\rho_{i,k}$) est conditionné pour réagir à la combinaison théorique ($S(P_{i,k})$) des émissions produites en $P_{i,k}$ par l'ensemble émetteur. On voit donc que l'émission diversifiée aboutit à définir a priori un espace coloré qui confère au système de la figure 6 des propriétés de réception munies d'une sélectivité angulaire.

La figure 7 illustre un mode de réalisation selon l'invention d'un système récepteur doté de la même sélectivité angulaire. Des filtres adaptés 8 au code C sont alimentés par le récepteur unique 6 qui reçoit les échos provenant de l'espace coloré. Les filtres adaptés 8 à chacun des codes émis utilisés pour exciter les éléments rayonnants de l'ensemble d'émission 1 séparent chacun des codes de l'ensemble des codes $C_{1,1}$,$C_{1,2}$,... $C_{1,n}$, ...$C_{mn}$. Les pics de corrélation délivrés par les filtres adaptés 8 sont ensuite traités par un circuit de formation de voies angulaires 9 qui comporte m x n entrées reliées à r x s sorties. On a représenté par des traits pointillés le groupement interne au circuit 9 de compensation des retards $\tau_{ij}$ des codes qui sert à former la voie $V(P_{1,1})$. Cette voie est desservie par les signaux provenant des m x n filtres 8 additionnés avec des retards qui, ajoutés aux retards d'arrivée au point $P_{1,1}$ des émissions élémentaires, donnent un retard total constant. Le montage récepteur de la figure 7 est équivalent au montage de la figure 6, mais il met mieux en évidence la fonction "imagerie" du circuit formateur 9 qui, bien que situé dans la section réception d'un système à écho, apporte un pouvoir séparateur et un contraste énergétique fondé sur la géométrie des moyens d'émission. Pour cela, le circuit formateur 9 est un circuit dit "de formation de voie d'émission à la réception".

## Revendications

1. Système de détection multivoies à émission diversifiée comprenant des moyens d'émission (1) utilisant un ensemble d'éléments rayonnants ($E_{m,n}$), et des moyens de réception captant des échos dus à la réflexion des rayonnements émis par lesdits éléments rayonnants, dans lequel lesdits moyens d'émission comprennent des moyens d'excitation impulsionnelle simultanée (2) desdits éléments rayonnants ($E_{m,n}$) assignant à chacun d'eux un signal d'émission caractéristique, lesdits moyens de réception comportant un récepteur (6) relié à plusieurs voies réceptrices correspondant respectivement à des directions angulaires prédéterminées, caractérisé en ce que chaque élément rayonnant ($E_{m,n}$) illumine sensiblement un même secteur angulaire, en ce que lesdits moyens de réception sont disposés au sommet dudit secteur angulaire et en ce que lesdites voies réceptrices comprennent plusieurs filtres (8), adaptés respectivement à la configuration particulière des signaux d'émission caractéristiques et connectés audit récepteur (6) pour séparer dans les échos reçus lesdits signaux caractéristiques, et des moyens (9) de formation de voies angulaires connectés auxdits filtres adaptés pour compenser, pour chaque voie angulaire, les retards subis par lesdits signaux caractéristiques contenus dans un écho venant de la direction angulaire correspondante.

2. Système selon la revendication 1, caractérisé en ce que chaque signal caractéristique est caractérisé par une fréquence d'émission distincte et en ce que lesdits filtres adaptés (8) sont des filtres passe-bande décalés en fréquence.

## Claims

1. A multi-path detection system using diversified transmission comprising transmission means (1) employing a group of radiating elements ($E_{m,n}$) and receiving means capturing echoes due to the reflection of the radiation emitted by the said radiating elements, in which the said transmission means comprises simultaneous pulse excitation means (2) of the said radiating elements ($E_{m,n}$) assigning to each of them a characteristic transmission signal, the said receiving means comprising a receiver (6) connected with a plurality of receiving paths corresponding respectively to predetermined angular directions, characterized in that each radiating element ($E_{m,n}$) substantially illuminates the same angular sector, in that the said receiving means are mounted at the apex of the said angular sector and in that the said receiving paths comprise a plurality of filters (8), respectively adapted to the particular configuration of the characteristic transmission signals and connected with the said receiver (6) in order to separate, in the received echoes, the said characteristic signals, and angular path formation means (9) connected with the said filters adapted to compensate, for each angular path, the delays suffered by the said characteristic signals contained in an echo coming in the corresponding angular direction.

**2.** The system as claimed in claim 1, characterized in that each characteristic signal is characterized by a distinct frequency of transmission and in that the said filters (8) are pass band filters with a frequency offset.

**Patentansprüche**

**1.** Mehrkanal-Erfassungssystem mit diversifizierter Ausstrahlung sowie Ausstrahlungsmitteln (1), die eine Gesamtheit von Strahlungselementen ($E_{m,n}$) verwenden, und Empfängermitteln, die die durch die Reflexion der von den Strahlungselementen emittierten Strahlungen verursachten Echos aufnehmen, wobei in dem System die Ausstrahlungsmittel Mittel für die gleichzeitige impulsartige Erregung (2) der Strahlungselemente ($E_{m,n}$) umfassen, die jedem der letzteren ein charakteristisches Ausstrahlungssignal zuweisen, wobei die Empfängermittel einen Empfänger (6) aufweisen, der mit einer Mehrzahl von Aufnahmekanälen verbunden ist, die jeweiligen vorgegebenen Winkelrichtungen entsprechen, dadurch gekennzeichnet, daß jedes Strahlungselement ($E_{m,n}$) im wesentlichen einen gleichen Winkelsektor anstrahlt, daß die Empfängermittel im Scheitel des Winkelsektors angeordnet sind und daß die Aufnahmekanäle versehen sind mit einer Mehrzahl von Filtern (8), die an die jeweilige besondere Konfiguration der charakteristischen Ausstrahlungssignale angepaßt und mit dem Empfänger (6) verbunden sind, um in den empfangenen Echos die charakteristischen Signale zu trennen, und Mitteln (9) für die Ausbildung von Winkelkanälen, die mit den angepaßten Filtern verbunden sind, um für jeden Winkelkanal die Verzögerungen zu kompensieren, die von den charakteristischen Signalen bewirkt werden, die in einem in der entsprechenden Winkelrichtung ankommenden Echo enthalten sind.

**2.** System gemäß Anspruch 1, dadurch gekennzeichnet, daß jedes charakteristische Signal durch eine verschiedene Ausstrahlungsfrequenz gekennzeichnet ist und daß die angepaßten Filter (8) frequenzverzögerte Tiefpaßfilter sind.

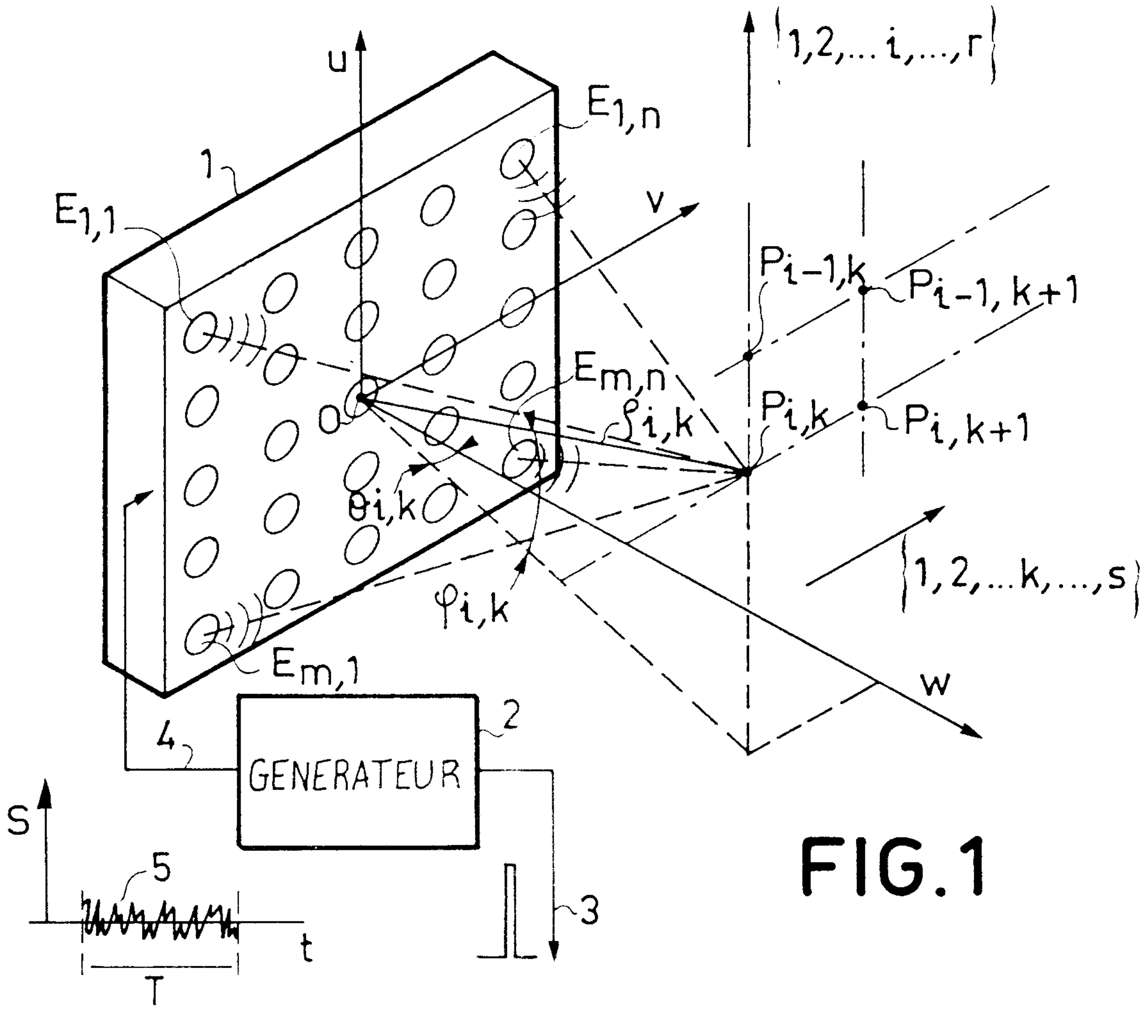


FIG.1

FIG.2

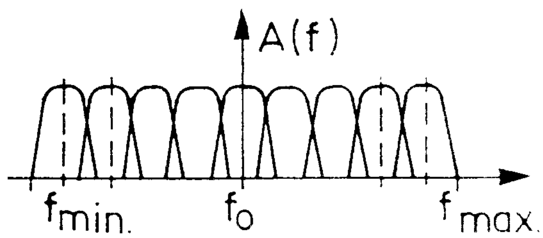


FIG.3

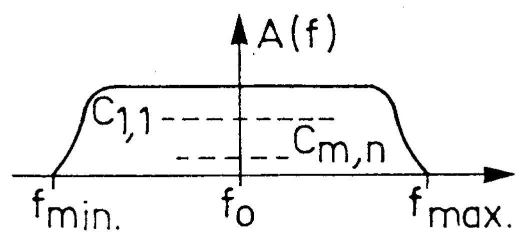


FIG.4

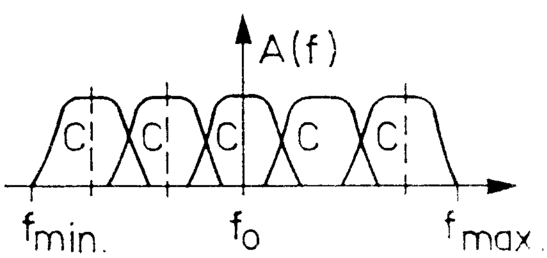


FIG.5

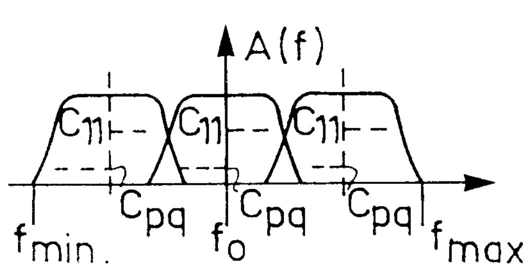

FIG. 6

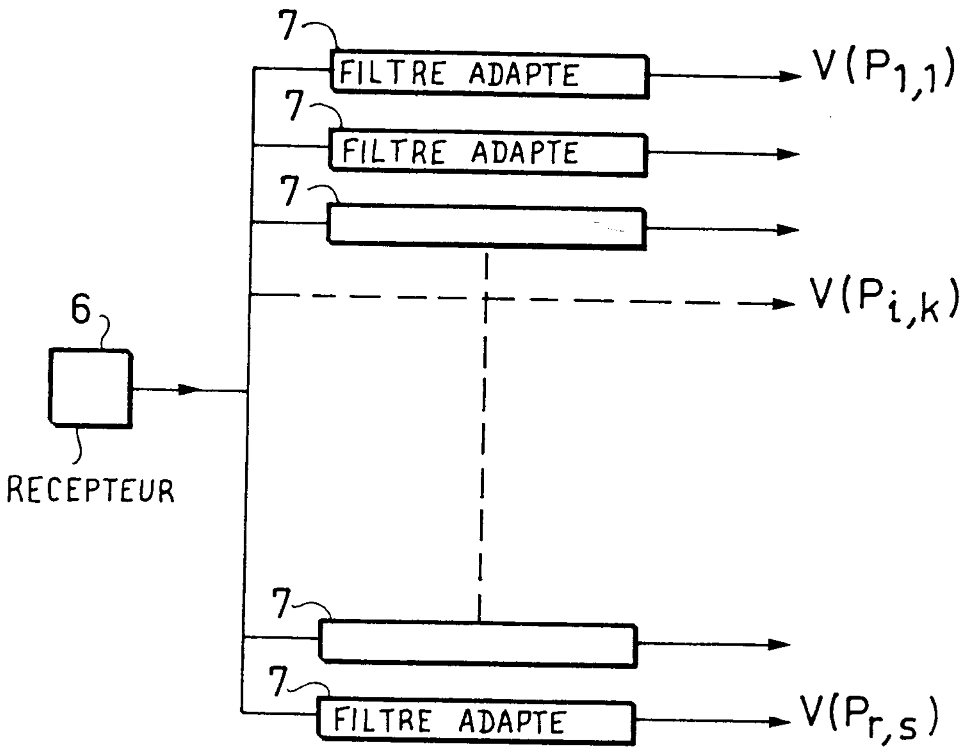
7
FILTRE ADAPTE
V(P1,1)
7
FILTRE ADAPTE
7
6
V(Pi,k)
RECEPTEUR
7
7
FILTRE ADAPTE
V(Pr,s)

FIG. 7

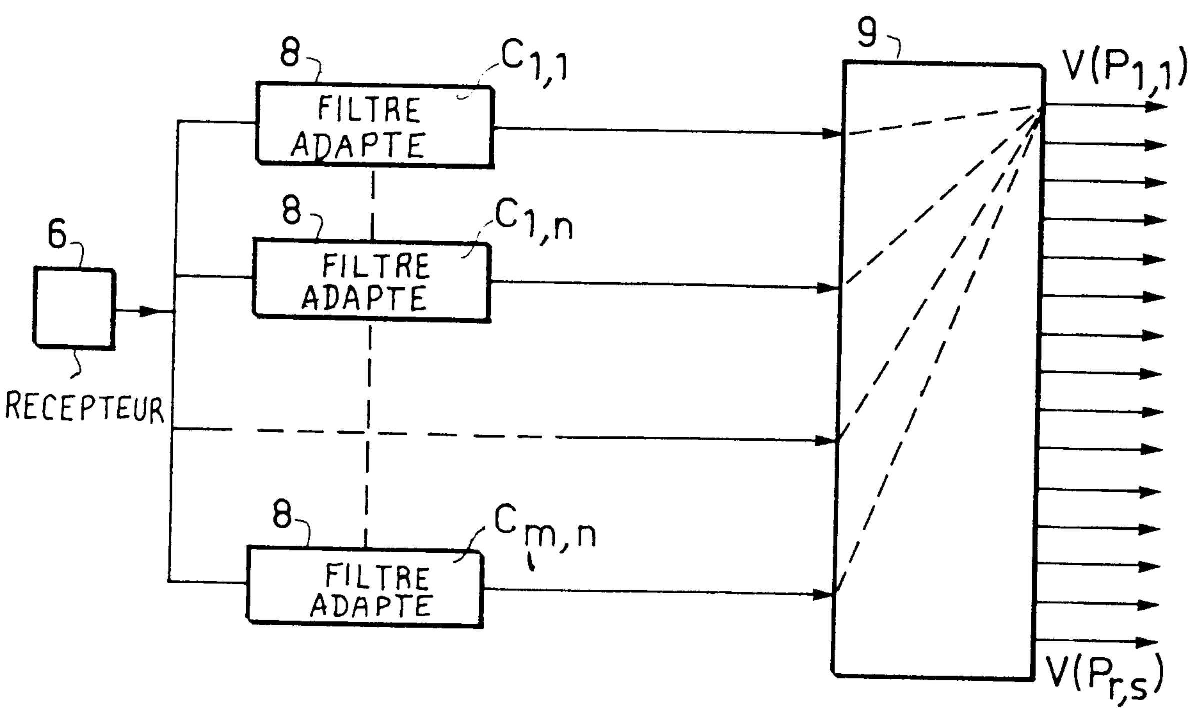
8
C1,1
FILTRE ADAPTE
9
V(P1,1)
8
C1,n
FILTRE ADAPTE
6
RECEPTEUR
8
Cm,n
FILTRE ADAPTE
V(Pr,s)